# EUROPEAN PATENT APPLICATION

(11) **EP 1 645 388 A1**
(43) Date of publication of application: **12.04.2006**
(21) Application number: 04425763.2
(22) Date of filing: 11.10.2004
(51) Int. Cl.: B29C 44/42, B29C 44/12, B29C 45/14

(54) **System and method for producing a foamed article**

(71) Applicant: Tecnocad Progetti Spa, 10135 Torino (IT)
(72) Inventor: Calzavarini, Sergio, 10135 Torino (IT)
(74) Representative: Marchitelli, Mauro

(57) **Abstract**

A system for producing a foamed article (46) including a support element (22) of rigid plastic material, a coating layer (20) and a layer of foamed material (42) interposed between the coating layer (20) and the rigid support element (22), comprising:
- a first and a second half-mould (12, 14), between which are positioned the support element (22) and the coating layer (20), with a foaming space (24) defined between the support element (22) and the coating layer (20),
- an injection nozzle (26) having an outlet opening (28), positioned to inject foamable material between the first and the second half-mould (12, 14).

The support element (22) made of rigid plastic material comprises an integral extension (38) having a hole (39) which communicates directly with the outlet opening (28) of the injection nozzle (26) and puts the injection nozzle (26) in communication with the foaming layer (24).

## Description

The present invention relates to a system and method for producing a foamed article.

Many foamed articles, such as dashboards for vehicles, comprise a support element made of rigid plastic material, a coating layer (for instance made of imitation leather or the like), and a layer of foamed plastic material interposed between the coating layer and the support element made of rigid plastic material. The production of articles of this kind is effected using a foaming mould including a first and a second half-mould, movable between an open position and a closed position. The support element and the coating layer are positioned between the two half-moulds and a foaming space is defined between the support element and the coating layer. The foaming space communicates with an injection channel connected to an injection head.

In prior art solutions, the injection channel is formed by an elongated hole which extends through one of the half-moulds. In solutions of this kind, the foamed plastic material polymerises in the injection channel. There are problems to assure the detachment of the foamed material from the wall of the injection channel. An additional problem is that the foamable material can position itself between the support element made of rigid plastic material and the wall of one of the half-moulds. This makes it difficult to extract the finished article from the mould and causes problems in regard to cleaning the mould. Further problems are due to the presence of particles of foamed material in the injection channel which in the subsequent production cycles can end in the space defined between the coating layer and the rigid support element, partly obstructing the regular filling of the foaming space.

The object of the present invention is to provide a system and a method for producing a foamed article, which allow to overcome the problems of the prior art.

According to the present invention, said object is achieved by a system and by a method having the characteristics set out in the claims.

The present invention shall be described in detail with reference to the accompanying drawings, provided purely by way of non limiting example, in which:
- Figure 1 is a schematic axial section showing a system according to the present invention,
- Figure 2 is an enlarged scale section of the part indicated by the arrow II of Figure 1, and
- Figures 3, 4 and 5 are schematic sections illustrating different steps of the method according to the invention.

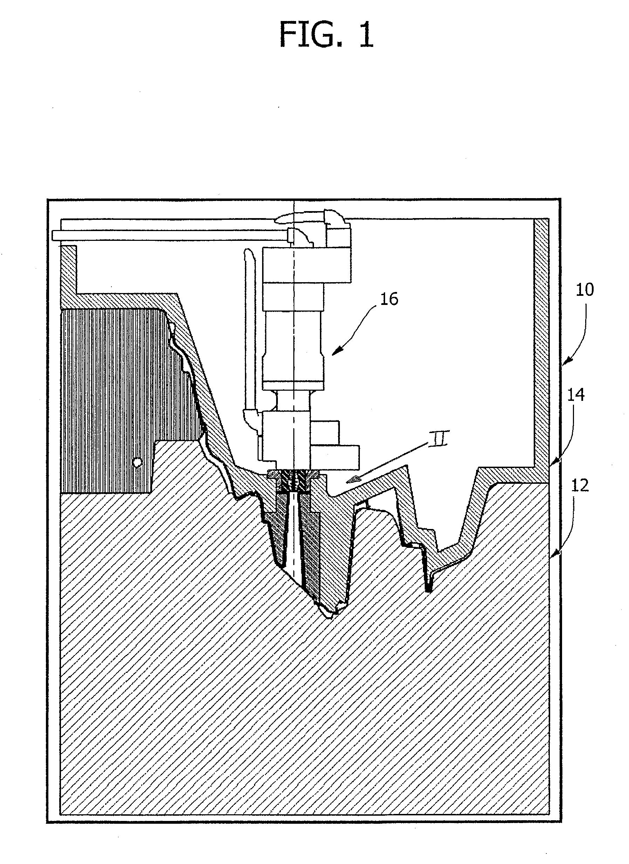

With reference to Figure 1, the reference number 10 designates a system for the production of a foamed article, in particular a dashboard for motor vehicles. The system 10 comprises a lower half-mould 12 or die and an upper half-mould 14 or punch. The upper half-mould 10 bears an injection head adapted to inject a mixture of foamable material between the half-moulds 12, 14.

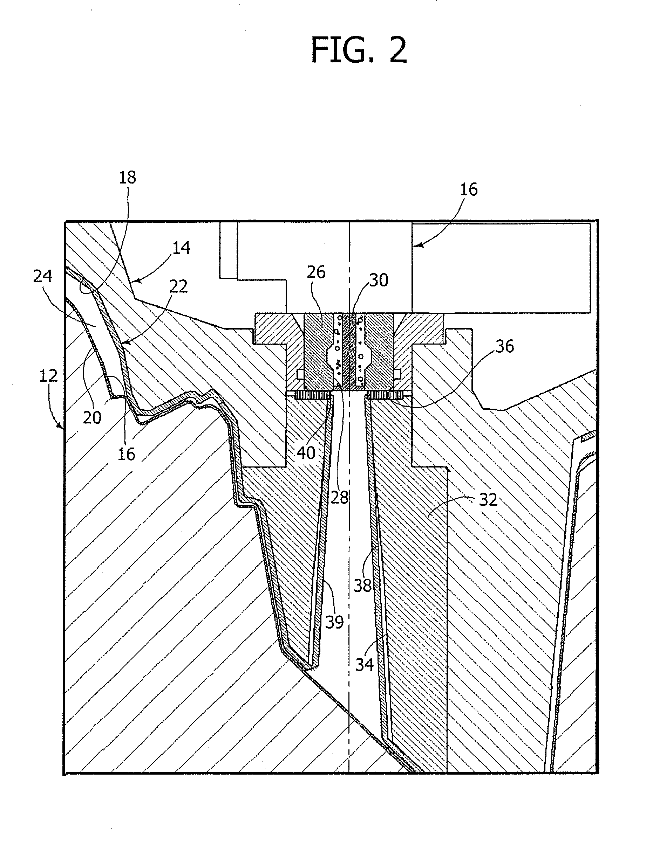

With reference to the detail of Figure 2, the die 12 and the punch 14 are provided with respective active surfaces 16, 18. A flexible coating layer 20 (e.g., imitation leather) is applied on the active surface 16 of the die 12. A support element 22 of rigid plastic material is applied against the active surface 18 of the punch 14. The support element 22 is preventively produced by injection moulding in a separate injection moulding apparatus.

Between the support element 22 made of rigid plastic material and the coating layer 20 is formed a foaming space 24 into which is destined to be injected a mixture of foamable material, e.g. polyurethane. Figure 2 shows the step in which the two half-moulds 12, 14 are in closed position, immediately before the step of injecting the foamable mixture, so that the space 24 between the support element 22 and the coating layer 20 is still empty.

With reference again to Figure 2, the injection head 16 comprises a nozzle 26 provided with an injection opening 28 and a shutter element 30. The punch 14 comprises an injection bushing 32 having an elongated hole 34 preferably with a cone frustum shape with the smaller section at the injection opening and the larger section at the active surface 18. In the example illustrated in the figures, the injection bushing 32 is a separate component fastened to the punch 14. A gasket 36 is interposed between the mutually facing frontal surfaces of the nozzle 36 and of the injection bushing 32. The gasket 36 surrounds the upper end of the hole 34. If the injection bushing 32 is not present as a separate component, the gasket 36 is interposed between a surface of the punch 14 and the frontal surface of the nozzle 26. The gasket 36 connects in sealed fashion the nozzle 26 to the injection bushing 32 or to the punch 14 and establishes a sealed connection between the injection opening 28 and the upper part of the hole 34.

According to the present invention, the support element made of rigid plastic material 22 has an elongated integral extension 38 with cone frustum shape which extends inside the hole 34 and with an upper part 40 which ends at the sealing gasket 36. The integral extension 38 has a through hole 39 which communicates directly with the injection opening 28 of the nozzle 26. The hole of the integral extension 38 communicates with the foaming space 24 defined between the support element 22 and the coating layer 20.

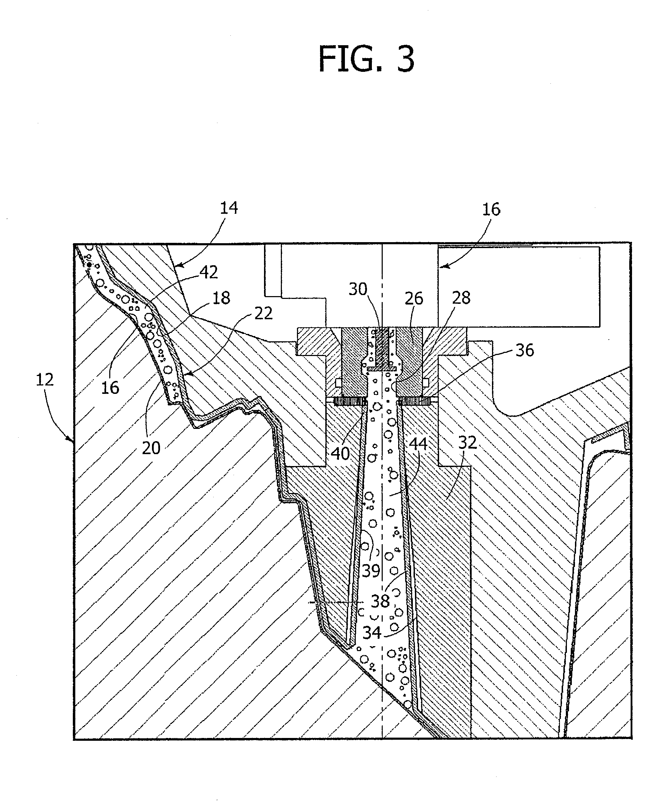

With reference to Figure 3, during the step of injecting the foamable mixture, the shutter 30 is opened and the foamable mixture passes directly from the opening 28 of the nozzle 26 to the hole of the tubular extension 38. The gasket 36 prevents the foamable mixture from positioning itself between the outer surface of the integral extension 38 and the inner part of the hole 34. The integral extension 38 constitutes an injection channel which establishes a connection between the foaming space 24 and the injection opening 28.

The foamable mixture is injected into the integral extension 38 through the injection opening 28 and reaches the foaming space 24 passing between the coating layer 20 and the support element 22. After filling the foaming space 24, the foamable mixture polymerises forming a layer of foamed plastic material 42 (Figure 3) interposed between the coating layer 20 and the rigid support element 22. The foamable mixture also polymerises inside the integral extension 38 forming a cone 44 made of foamed plastic material which fills the internal part of the cone frustum extension 38.

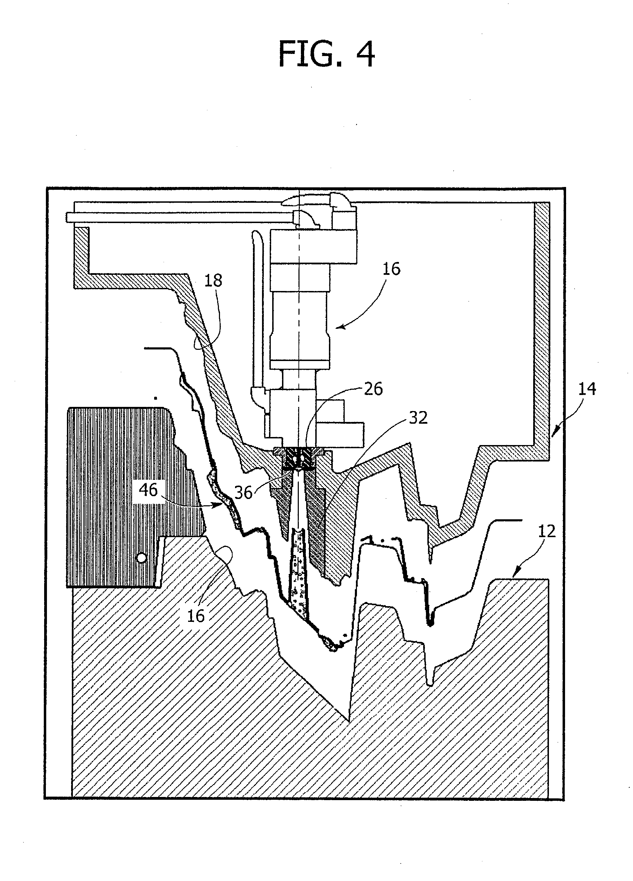

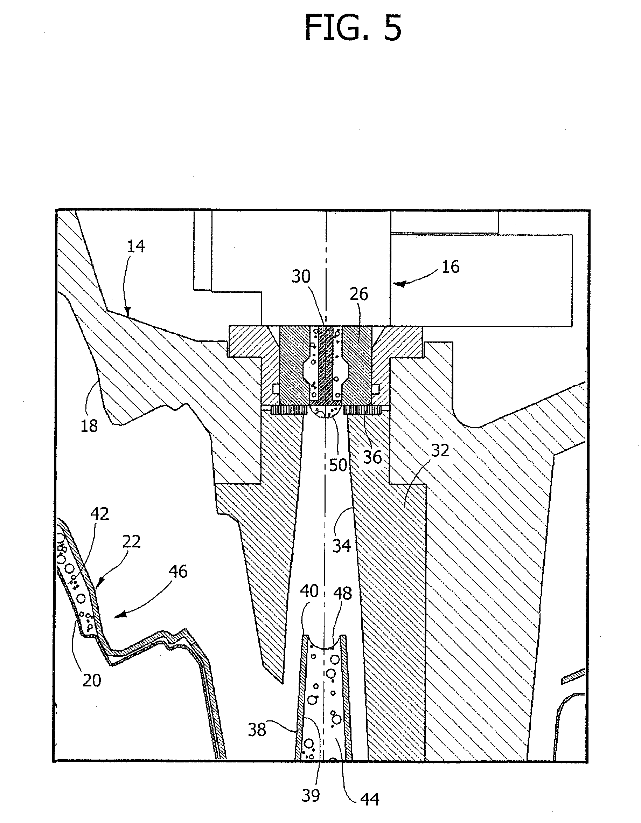

With reference to Figures 4 and 5, after completing the foaming step, the mould is opened and the foamed article 46 is extracted from the mould. In this step, the upper part 48 of the cone of foamed material 44 is detached from the shutter 30. On the lower surface of the shutter remains a drop of polyurethane foam 50 (Figure 5). A contemporary patent application by the same applicant describes an apparatus designed specifically to remove the polyurethane drop 50 which remains adherent to the shutter 30. The surface of the hole 34 remains perfectly clean, since it never comes in contact with the foamable material.

As shown in Figures 2 and 3, the upper part 40 of the integral extension 38 comes in contact with the gasket 36 establishing a sealing contact which prevents the foamable mixture from positioning itself between the tubular extension 38 and the inner surface of the hole 34.

The integral extension 38 filled with foamed material 44 is then removed in the course of a subsequent finishing step. Preferably, the extension 38 is formed in a part of the rigid support element 22 in which is formed a through opening, for example the opening of a dashboard wherein is to be mounted a radio.

## Claims

1. A system for producing a foamed article (46) including a support element (22) of rigid plastic material, a coating layer (20) and a layer of foamed material (42) interposed between the coating layer (20) and the rigid support element (22), comprising:
- a first and a second half-mould (12, 14), between which are positioned the support element (22) and the coating layer (20), with a foaming space (24) defined between the support element (22) and the coating layer (20),
- an injection nozzle (26) having an outlet opening (28), positioned to inject foamable material between the first and the second half-mould (12, 14),
- an injection channel (34) extending through one of said half-moulds (14),
**characterised in that** the support element (22) made of rigid plastic material comprises an integral extension (38) having a hole (39) which communicates directly with the outlet opening (28) of the injection nozzle (26) and puts the injection nozzle (26) in communication with the foaming layer (24).

2. System as claimed in claim 1, **characterised in that** it comprises a gasket (36) surrounding said outlet opening (28).

3. System as claimed in claim 2, **characterised in that** one end (40) of said integral extension (38) comes in contact with said gasket (36).

4. System as claimed in claim 1, **characterised in that** said integral extension (38) extends inside a hole (34) formed in one of said half-moulds (14).

5. A method for producing a foamed article (46) including a support element (22) of rigid plastic material, a coating layer (20) and a layer of foamed plastic material (42) between the coating layer (20) and the rigid support element (22), comprising the steps of:
- providing a foaming mould including a first and a second half-mould (12, 14),
- arranging the support element (22) and the coating layer (20) between the first and the second half-mould (12, 14) in such a way as to form a foaming space (24) between the rigid support element (22) and the coating layer (20),
- injecting foamable plastic material through an opening (28) of an injection nozzle (26) connected to an injection channel (34),
**characterised in that** it comprises the step of providing on the support element (22) made of rigid plastic material an integral extension (38) having a hole (39) which communicates directly with the outlet opening (28) of the injection nozzle (26).

6. A method as claimed in claim 5, **characterised in that** it comprises the step of providing a seal (36) between one end of said integral extension (38) and said injection nozzle (26).
